# EUROPEAN PATENT APPLICATION

(11) **EP 4 142 394 A1**
(43) Date of publication of application: **01.03.2023**
(21) Application number: 21793325.8
(22) Date of filing: 23.04.2021
(51) Int. Cl.: H04W 72/04, H04W 4/06

(54) **BROADCAST/MULTICAST SERVICE MANAGEMENT METHOD AND APPARATUS, AND ELECTRONIC DEVICE AND STORAGE MEDIUM**

(30) Priority: 24.04.2020 CN 202010333931
(71) Applicant: ZTE Corporation, Shenzhen, Guangdong 518057 (CN)
(72) Inventor: WANG, Liping, Shenzhen, Guangdong 518057 (CN); CHEN, Lin, Shenzhen, Guangdong 518057 (CN); QI, Tao, Shenzhen, Guangdong 518057 (CN); ZHU, Hao, Shenzhen, Guangdong 518057 (CN); CAO, Kun, Shenzhen, Guangdong 518057 (CN)
(74) Representative: Tiburzi, Andrea
(86) International application number: PCT/CN2021/089169
(87) International publication number: WO 2021/213491

(57) **Abstract**

Provided are a broadcast/multicast service management method and apparatus, an electronic device, and a storage medium. The method includes sending first information to a second communication unit, where the first information is used for indicating the second communication unit to execute an operation related to broadcast/multicast service management, and receiving second information sent by the second communication unit, where the second information is used for indicating an execution result of the operation to a first communication unit.

## Description

### TECHNICAL FIELD

The present application relates to wireless communication networks and, in particular, to a broadcast/multicast service management method and apparatus, an electronic device, and a storage medium.

### BACKGROUND

There has always been a need for multimedia broadcast multicast services in cellular networks. The application scenarios of multimedia broadcast multicast services are gradually expanded from initial video broadcasting services of terrestrial broadcast television to vertical services such as public safety, vehicle-to-everything, and Internet of Things (IoT).

Multimedia broadcast multicast services (MBMS) is a point-to-multipoint service that sends data from one data source to multiple users. The technologies related to the 5th generation mobile communication technology (5G), which have been discussed and standardized in the industry, are mainly related to a unicast service scenario, that is, a point-to-point service mode, while the standardized discussion of a point-to-multipoint service mode has not been carried out. With the rapid increase of users and the multi-dimensioning of application scenarios, the point-to-multipoint service mode inevitably becomes one of the indispensable service modes. To meet the increasing requirements of the point-to-multipoint service, how to effectively implement the MBMS on the radio access network (RAN) air interface under the 5G framework becomes an urgent problem to be solved.

### SUMMARY

The present application provides a broadcast/multicast service management method and apparatus, an electronic device, and a storage medium.

An embodiment of the present application provides a broadcast/multicast service management method. The method includes sending first information to a second communication unit, where the first information is used to instruct the second communication unit to execute an operation related to broadcast/multicast service management, and receiving second information sent by the second communication unit, where the second information is used to indicate an execution result of the operation to a first communication unit.

An embodiment of the present application provides another broadcast/multicast service management method. The method includes receiving first information sent by a first communication unit, where the first information is used to instruct a second communication unit to execute an operation related to broadcast/multicast service management, and sending second information to the first communication unit, where the second information is used to indicate an execution result of the operation to the first communication unit.

An embodiment of the present application provides another broadcast/multicast service management method. The method includes sending third information to a first communication unit, where the third information is used to instruct the first communication unit to execute an operation related to broadcast/multicast service management, and receiving fourth information sent by the first communication unit, where the fourth information is used to indicate an execution result of the operation to a second communication unit.

An embodiment of the present application provides another broadcast/multicast service management method. The method includes receiving third information sent by a second communication unit, where the third information is used to instruct a first communication unit to execute an operation related to broadcast/multicast service management, and sending fourth information to the second communication unit, where the fourth information is used to indicate an execution result of the operation to the second communication unit.

An embodiment of the present application provides a broadcast/multicast service management apparatus. The apparatus includes a first sending module and a first reception module.

The first sending module is configured to send first information to a second communication unit. The first information is used to instruct the second communication unit to execute an operation related to broadcast/multicast service management.

The first reception module is configured to receive second information sent by the second communication unit. The second information is used to indicate an execution result of the operation to a first communication unit.

An embodiment of the present application provides another broadcast/multicast service management apparatus. The apparatus includes a second reception module and a second sending module.

The second reception module is configured to receive first information sent by a first communication unit. The first information is used to instruct a second communication unit to execute an operation related to broadcast/multicast service management.

The second sending module is configured to send second information to the first communication unit. The second information is used to indicate an execution result of the operation to the first communication unit.

An embodiment of the present application provides another broadcast/multicast service management apparatus. The apparatus includes a third sending module and a third reception module.

The third sending module is configured to send third information to a first communication unit. The third information is used to instruct the first communication unit to execute an operation related to broadcast/multicast service management.

The third reception module is configured to receive fourth information sent by the first communication unit. The fourth information is used to indicate an execution result of the operation to a second communication unit.

An embodiment of the present application provides another broadcast/multicast service management apparatus. The apparatus includes a fourth reception module and a fourth sending module.

The fourth reception module is configured to receive third information sent by a second communication unit. The third information is used to instruct a first communication unit to execute an operation related to broadcast/multicast service management.

The fourth sending module is configured to send fourth information to the second communication unit. The fourth information is used to indicate an execution result of the operation to the second communication unit.

An embodiment of the present application provides an electronic device. The device includes one or more processors and a memory.

The memory is configured to store one or more programs.

When executed by the one or more processors, the one or more programs cause the one or more processors to implement the method in any embodiment of the present application.

An embodiment of the present application provides a storage medium storing a computer program which, when executed by a processor, implements the method in any embodiment of the present application.

### BRIEF DESCRIPTION OF DRAWINGS

FIG. 1 is a flowchart of a broadcast/multicast service management method according to an embodiment of the present application.
FIG. 2 is a flowchart of another broadcast/multicast service management method according to an embodiment of the present application.
FIG. 3 is a flowchart of another broadcast/multicast service management method according to an embodiment of the present application.
FIG. 4 is a flowchart of another broadcast/multicast service management method according to an embodiment of the present application.
FIG. 5 is a flowchart illustrating the establishment of a broadcast/multicast service between a gNB-CU and a gNB-DU according to an embodiment of the present application.
FIG. 6 is a flowchart illustrating the modification of a broadcast/multicast service between a gNB-CU and a gNB-DU initiated by the gNB-CU according to an embodiment of the present application.
FIG. 7 is a flowchart illustrating the modification of a broadcast/multicast service between a gNB-CU and a gNB-DU initiated by the gNB-DU according to an embodiment of the present application.
FIG. 8 is a flowchart illustrating the release of a broadcast/multicast service between a gNB-CU and a gNB-DU initiated by the gNB-CU according to an embodiment of the present application.
FIG. 9 is a flowchart illustrating the release of a broadcast/multicast service between a gNB-CU and a gNB-DU initiated by the gNB-DU according to an embodiment of the present application.
FIG. 10 is a block diagram illustrating the structure of a broadcast/multicast service management apparatus according to an embodiment of the present application.
FIG. 11 is a block diagram illustrating the structure of another broadcast/multicast service management apparatus according to an embodiment of the present application.
FIG. 12 is a block diagram illustrating the structure of another broadcast/multicast service management apparatus according to an embodiment of the present application.
FIG. 13 is a block diagram illustrating the structure of another broadcast/multicast service management apparatus according to an embodiment of the present application.

### DETAILED DESCRIPTION

Embodiments of the present application are described hereinafter in detail in conjunction with drawings.

Multimedia broadcast multicast services is a point-to-multipoint service that sends data from one data source to multiple users. The broadcast network architecture of a conventional long-term evolution evolved MBMS (LTE eMBMS) is essentially designed for semi-static video service distribution. For example, the distribution of LTE eMBMS at the air interface does not rely on user feedback. Alternatively, there is only optional and limited feedback. Thus, the network can understand the reception interest and reception quality of users to a limited extent. The network cannot flexibly schedule services. For example, the network cannot dynamically adjust a broadcast area and resource occupation of broadcast. The preceding factors cause the waste of air interface resources to a certain extent, thereby hindering the use and popularization of the technology.

The single-cell point-to-multipoint (SC-PTM) technology introduced in the 3rd Generation Partnership Project Release 13 (3GPP Rel-13) is introduced to solve the flexibility of air interface scheduling to a certain extent. However, the SC-PTM technology essentially relies on the network architecture basis set in Release 9 (Rel-9). That is, a new bearing mode of air interface data is added based on an original architecture. This bearing mode is based on independent scheduling of a single cell and flexible use of air interface resources. For example, instead of using the physical multicast channel (PMCH) used in the multicast-broadcast single-frequency network (MBSFN) in the conventional eMBMS, a physical downlink shared channel (PDSCH) consistent with unicast data is used to implement dynamic and flexible scheduling. Although SC-PTM introduces some flexibility in air interface, the SC-PTM fails to solve the architecture problem: the semi-static configuration characteristic of the broadcast area. The dynamic adjustment of the broadcast area relying on the driving of a service level cannot be linked with the flexible and powerful UE air interface connection management in the 3GPP in the related art to implement efficient utilization of resources and assurance of the reliability and continuity of services to a certain extent.

The preceding problem is expected to be solved in a new radio (NR) system. A new broadcast architecture of 5G is defined. Multicast is supported. New service types such as public safety, consumer Internet of Things, and vehicle-to-everything are taken as scenario targets. With the preceding diverse scenarios as targets needing to be supported by a NR broadcast service bearing service, a flexible multicast broadcast architecture is provided and can accommodate requirements of various scenarios, such as point-to-point multicast/broadcast streams, delivery of IPv4/IPv6 multicast, IPTV, software delivery over wireless, group communication and broadcast/multicast IoT applications, vehicle-to-everything applications (V2X applications), or public safety. In the preceding scenarios, the newly provided framework can provide a certain degree of reliability, and can also support an energy-saving and resource-constrained receiving device. A receiving user equipment (UE) can switch between a receiving mode of point-to-point sending and a receiving mode of point-to-multipoint sending, thereby implementing a balance between reliability and receiving efficiency. In addition, basic UE mobility is supported in NR, thereby ensuring continuity of service reception by the UE in a switch/reselection scenario. In addition, uplink feedback of the UE is also supported in NR, thereby improving reception reliability of the UE. Based on the preceding analysis, introducing a support scheme of the broadcast/multicast service in NR needs to be considered, and an establishment flow of a broadcast/multicast service radio bearer also needs to be considered emphatically.

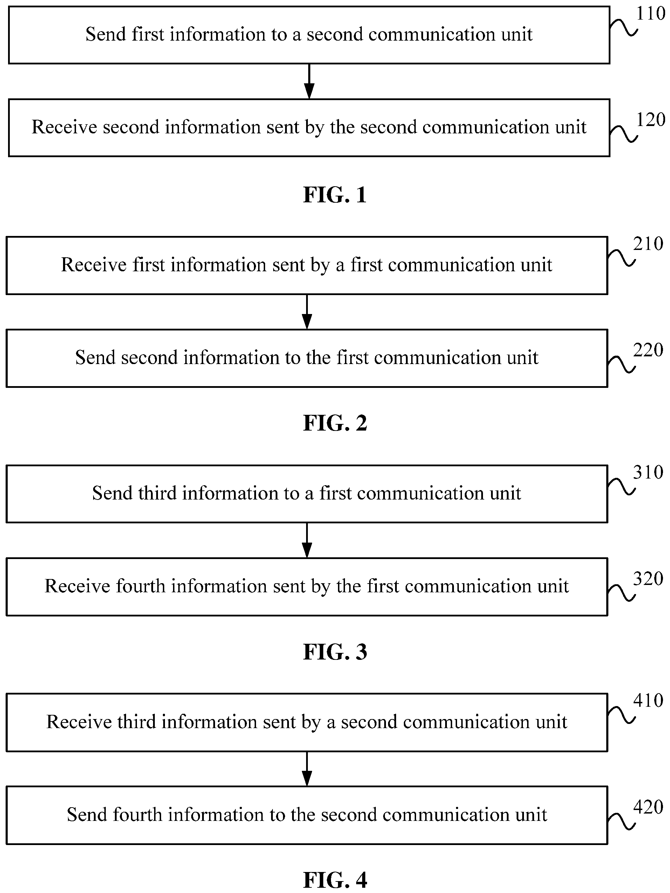

FIG. 1 is a flowchart of a broadcast/multicast service management method according to an embodiment of the present application. The method may be executed by a broadcast/multicast service management apparatus. The apparatus may be implemented by software and/or hardware, typically configured in an electronic device such as a base station. As shown in FIG. 1, the method includes operations below.

In operation 110, first information is sent to a second communication unit.

In this embodiment of the present application, the base station may be a split 5G base station. Split here means that the base station logically or physically includes a first communication unit and a second communication unit. For example, the first communication unit may be a centralized unit (CU), or a logical unit or a physical unit that implements the same or similar functions as the centralized unit. The second communication unit may be a distributed unit (DU), or a logical unit or a physical unit that implements the same or similar functions as the distributed unit. The centralized unit of the base station and the distributed unit of the base station may be denoted by gNB-CU and gNB-DU, respectively.

It is to be noted that the second communication unit is the gNB-DU to which a cell related to broadcast/multicast service management belongs. The cell related to broadcast/multicast service management is a cell in which a broadcast/multicast service needs to be established, modified, or released.

For example, the gNB-CU receives a broadcast/multicast service establishment request message sent by a core network, performs admission control on the broadcast/multicast service establishment request message, and determines in which cells the broadcast/multicast service can be established. Alternatively, due to some scenario requirements, the gNB-CU needs to modify parameter information of an established MBMS session to determine which cells need to be updated, modified, or released.

In this embodiment of the present application, a cell belongs to a service area. One service area includes multiple cells.

The first information is used for indicating the second communication unit to execute an operation related to broadcast/multicast service management. For example, the gNB-CU sends the first information to the gNB-DU to which a cell related to broadcast/multicast service management belongs to indicate the gNB-DU to execute the operation related to broadcast/multicast service management.

The first information includes a broadcast/multicast service establishment request message, a broadcast/multicast service modification request message, or a broadcast/multicast service release request message.

If the first information includes the broadcast/multicast service establishment request message or the broadcast/multicast service modification request message, the first information includes any combination or at least one of the following: a broadcast/multicast service identifier used to identify a broadcast/multicast service; a first interface identifier assigned by the first communication unit on the communication interface between the first communication unit and the second communication unit for a broadcast/multicast service; a second interface identifier assigned by the second communication unit on the communication interface between the first communication unit and the second communication unit for a broadcast/multicast service; one or more service area identifiers supporting a broadcast/multicast service; one or more cell identifiers of one or more cells which needs to establish, modify, or release a broadcast/multicast service, where the one or more cell identifiers include NR cell global identifier (NCGI) information or physical cell identifier (PCI) information; a cell list identifier of a service area; information of a broadcast/multicast service radio bearer needing to be established or modified; configuration information of a broadcast/multicast service; information of a radio link control (RLC) mode of a broadcast/multicast service radio bearer; information of a broadcast/multicast service radio bearer needing to be released, including identifier information of a broadcast/multicast service radio bearer; or change notification indication information, where the change notification indication information is used for the first communication unit to notify the second communication unit that configuration information of a broadcast/multicast service is changed.

Information of the established or modified broadcast/multicast service radio bearer includes identifier information of a broadcast/multicast service radio bearer and/or attribute information of a broadcast/multicast service radio bearer.

Specifically, the attribute information of a broadcast/multicast service radio bearer includes quality of service information of the broadcast/multicast service radio bearer, dataflow information mapped to the broadcast/multicast service radio bearer, and notification control. The dataflow information mapped to the broadcast/multicast service radio bearer includes dataflow identifier information and/or quality of service information of the dataflow mapped to the broadcast/multicast service radio bearer.

In this embodiment of the present application, the quality of service information of the broadcast/multicast service radio bearer and the quality of service information of the dataflow may include any combination or at least one of the following: nondynamic 5G quality of service identifier (5QI) information, dynamic 5QI information, allocation and retention priority, or data guaranteed flow bit rate quality of service (GFBR QoS) information.

The nondynamic 5QI information further includes any combination or at least one of the following: 5QI, priority level, averaging window, or maximum data burst volume.

The dynamic 5QI information further includes any combination or at least one of the following: priority level, packet delay budget, packet error rate, 5QI, critical delay, averaging window, or maximum data burst volume.

The allocation and retention priority further includes any combination or at least one of the following: priority level, pre-emption capability, or pre-emption vulnerability.

The data guaranteed flow bit rate quality of service information further includes any combination or at least one of the following: maximum downlink flow bit rate, downlink guaranteed flow bit rate, notification control, or maximum downlink packet loss rate.

In this embodiment of the present application, the configuration information of a broadcast/multicast service includes any combination or at least one of the following: system information of broadcast/multicast service information, control channel/information configuration parameters of the broadcast/multicast service, transport channel/information configuration parameters of the broadcast/multicast service, or radio bearer configuration parameters of the broadcast/multicast service.

Optionally, if the transport mode between the first communication unit and the second communication unit is Internet protocol (IP) multicasting, the first information also includes IP multicasting downlink user plane transport network layer (DL UP TNL) information assigned to the second communication unit.

The IP multicasting DL UP TNL information includes any combination or at least one of the following: an IP multicast address, an IP source address, or a general packet radio service tunneling protocol downlink tunnel endpoint identifier (GTP DL TEID).

If the first information includes the broadcast/multicast service release request message, the first information includes any combination or at least one of the following: a first interface identifier assigned by the first communication unit on the communication interface between the first communication unit and the second communication unit for a broadcast/multicast service, a second interface identifier assigned by the second communication unit on the communication interface between the first communication unit and the second communication unit for a broadcast/multicast service, or a reason for releasing a broadcast/multicast service.

In operation 120, second information sent by the second communication unit is received.

It is to be noted that the gNB-DU receives the first information sent by the gNB-CU, performs admission control according to the first information, and decides whether to execute the operation related to broadcast/multicast service management in the corresponding cell indicated by the gNB-CU. Deciding whether to execute the operation related to broadcast/multicast service management in the corresponding cell indicated by the gNB-CU may include deciding whether to establish or modify a broadcast/multicast service radio bearer in the corresponding cell indicated by the gNB-CU. If the gNB-DU receives the broadcast/multicast service release request message sent by the gNB-CU, the broadcast/multicast service radio bearer in the corresponding cell indicated by the gNB-CU is released.

In this embodiment of the present application, the second information is used for indicating an execution result of the operation related to broadcast/multicast service management to the first communication unit. The second information includes a broadcast/multicast service establishment response message, a broadcast/multicast service modification response message, or a broadcast/multicast service release response message.

For example, if the gNB-DU agrees to establish a corresponding broadcast/multicast service radio bearer in the corresponding cell indicated by the gNB-CU, a broadcast/multicast service establishment acknowledgement message is returned to the gNB-CU. If the gNB-DU does not agree to establish a corresponding broadcast/multicast service radio bearer in the corresponding cell indicated by the gNB-CU, a broadcast/multicast service establishment failure message is returned to the gNB-CU. Alternatively, if the gNB-DU agrees to modify a corresponding broadcast/multicast service radio bearer in the corresponding cell indicated by the gNB-CU, a broadcast/multicast service modification acknowledgement message is returned to the gNB-CU. If the gNB-DU does not agree to modify a corresponding broadcast/multicast service radio bearer in the corresponding cell indicated by the gNB-CU, a broadcast/multicast service modification failure message is returned to the gNB-CU. Alternatively, if the NB-DU receives the broadcast/multicast service release request message sent by the gNB-CU, a broadcast/multicast service release complete message is returned to the gNB-CU.

In this embodiment of the present application, if the second information includes the broadcast/multicast service establishment response message or the broadcast/multicast service modification response message, the second information includes any combination or at least one of the following: a broadcast/multicast service identifier used to identify a broadcast/multicast service; a first interface identifier assigned by the first communication unit on the communication interface between the first communication unit and the second communication unit for a broadcast/multicast service; a second interface identifier assigned by the second communication unit on the communication interface between the first communication unit and the second communication unit for a broadcast/multicast service; one or more service area identifiers supporting a broadcast/multicast service; one or more pieces of cell identifier information of an established, modified, or released broadcast/multicast service; information of successfully established or modified broadcast/multicast service radio bearer including identifier information of a successfully established or modified broadcast/multicast service radio bearer and/or a logical channel identifier of a successfully established or modified broadcast/multicast service radio bearer; information of successfully released broadcast/multicast service radio bearer; configuration information of a second communication unit of a broadcast/multicast service; downlink data TNL information of a successfully established or modified broadcast/multicast service radio bearer, where the downlink data TNL information includes an IP address and/or a GTP DL TEID; information of a broadcast/multicast service radio bearer which is failed to be established, including identifier information of the broadcast/multicast service radio bearer which is failed to be established and/or a reason for establishment failure of the broadcast/multicast service radio bearer; information of a broadcast/multicast service radio bearer which is failed to be modified, including identifier information of the broadcast/multicast service radio bearer which is failed to be modified and/or a reason for modification failure of the broadcast/multicast service radio bearer; a reason for establishment failure of a broadcast/multicast service; or a reason for modification failure of a broadcast/multicast service.

The downlink data TNL information of a successfully established or modified broadcast/multicast service radio bearer is unique downlink data TNL information shared by all cells in the second communication unit or multiple pieces of downlink data TNL information unique to each cell in the second communication unit.

Specifically, the configuration information of a second communication unit of a broadcast/multicast service includes any combination or at least one of the following: configuration parameters of a second communication unit of control channel/information of the broadcast/multicast service, configuration parameters of a second communication unit of transport channel/information of the broadcast/multicast service, or configuration parameters of a second communication unit of the broadcast/multicast service radio bearer.

The configuration parameters of a second communication unit of control channel/information of a broadcast/multicast service include any combination or at least one of the following: a repetition period of broadcast/multicast control channel/information, an offset of broadcast/multicast control channel/information, a start slot of broadcast/multicast control channel/information, a duration of broadcast/multicast control channel/information, a modification period of broadcast/multicast control channel/information, or a frequency domain bandwidth part identifier of broadcast/multicast control channel/information.

The configuration parameters of a second communication unit of transport channel/information of a broadcast/multicast service include scheduling configuration information of broadcast/multicast transport channel/information. The scheduling configuration information of broadcast/multicast transport channel/information includes any combination or at least one of the following: a duration timer of broadcast/multicast transport channel/information, a timer related to discontinuous reception (DRX) of broadcast/multicast transport channel/information, a scheduling period of broadcast/multicast transport channel/information, a scheduling offset of broadcast/multicast transport channel/information, or a frequency domain bandwidth part identifier of broadcast/multicast transport channel/information.

The configuration parameters of a second communication unit of a broadcast/multicast service radio bearer include any combination or at least one of the following: a sequence number length of an RLC layer or a reassembly timer.

If the second information includes the broadcast/multicast service release response message, the second information includes any combination or at least one of the following: a first interface identifier assigned by the first communication unit on the communication interface between the first communication unit and the second communication unit for a broadcast/multicast service or a second interface identifier assigned by the second communication unit on the communication interface between the first communication unit and the second communication unit for a broadcast/multicast service.

FIG. 2 is a flowchart of another broadcast/multicast service management method according to an embodiment of the present application. The method may be executed by a broadcast/multicast service management apparatus. The apparatus may be implemented by software and/or hardware, typically configured in an electronic device such as a base station. As shown in FIG. 2, the method includes operations below.

In operation 210, first information sent by a first communication unit is received.

In operation 220, second information is sent to the first communication unit.

According to the technical solution in this embodiment of the present application, a RAN air interface effectively implements related management flows such as establishment, modification, or release of a broadcast/multicast service under an NR architecture.

FIG. 3 is a flowchart of another broadcast/multicast service management method according to an embodiment of the present application. The method may be executed by a broadcast/multicast service management apparatus. The apparatus may be implemented by software and/or hardware, typically configured in an electronic device such as a base station. As shown in FIG. 3, the method includes operations below.

In operation 310, third information is sent to a first communication unit.

It is to be noted that the third information is used for indicating the first communication unit to execute an operation related to broadcast/multicast service management. For example, a gNB-DU sends the third information to a gNB-CU to indicate the gNB-CU to execute the operation related to broadcast/multicast service management. Due to some scenario requirements, the gNB-DU needs to modify or release an established broadcast/multicast service. In this case, the third information is sent to the gNB-CU to indicate the gNB-CU to modify or release a corresponding broadcast/multicast service.

Specifically, the third information includes a broadcast/multicast service modification request message or a broadcast/multicast service release request message.

If the third information includes the broadcast/multicast service modification request message, the third information includes any combination or at least one of the following: a broadcast/multicast service identifier used to identify a broadcast/multicast service; a first interface identifier assigned by the first communication unit on the communication interface between the first communication unit and a second communication unit for a broadcast/multicast service; a second interface identifier assigned by a second communication unit on the communication interface between the first communication unit and the second communication unit for a broadcast/multicast service; one or more service area identifiers supporting a broadcast/multicast service; one or more cell identifiers of one or more cells which needs to modify or release a broadcast/multicast service, where the cell identifiers include NCGI information or PCI information; a cell list identifier of a service area; attribute information of a broadcast/multicast service radio bearer needing to be modified; configuration information of a second communication unit of a broadcast/multicast service; or downlink data TNL information of a broadcast/multicast service radio bearer needing to be modified, where the downlink data TNL information includes an IP address and/or a GTP DL TEID.

The downlink data TNL information of a broadcast/multicast service radio bearer needing to be modified may be unique downlink data TNL information shared by all cells in a second communication unit or multiple pieces of downlink data TNL information unique to each cell in a second communication unit.

Specifically, the attribute information of a broadcast/multicast service radio bearer needing to be modified includes any combination or at least one of the following: identifier information of the broadcast/multicast service radio bearer or an RLC status of the broadcast/multicast service radio bearer.

Specifically, the configuration information of a second communication unit of a broadcast/multicast service includes any combination or at least one of the following: configuration parameters of a second communication unit of control channel/information of the broadcast/multicast service, configuration parameters of a second communication unit of transport channel/information of the broadcast/multicast service, or configuration parameters of a second communication unit of a broadcast/multicast service radio bearer.

The configuration parameters of a second communication unit of control channel/information of a broadcast/multicast service include any combination or at least one of the following: a repetition period of broadcast/multicast control channel/information, an offset of broadcast/multicast control channel/information, a start slot of broadcast/multicast control channel/information, a duration of broadcast/multicast control channel/information, a modification period of broadcast/multicast control channel/information, or a frequency domain bandwidth part identifier of broadcast/multicast control channel/information.

The configuration parameters of a second communication unit of transport channel/information of a broadcast/multicast service include scheduling configuration information of broadcast/multicast transport channel/information. The scheduling configuration information of broadcast/multicast transport channel/information includes any combination or at least one of the following: a duration timer of broadcast/multicast transport channel/information, a timer related to discontinuous reception (DRX) of broadcast/multicast transport channel/information, a scheduling period of broadcast/multicast transport channel/information, a scheduling offset of broadcast/multicast transport channel/information, or a frequency domain bandwidth part identifier of broadcast/multicast transport channel/information.

The configuration parameters of a second communication unit of a broadcast/multicast service radio bearer include any combination or at least one of the following: a sequence number length of an RLC layer or a reassembly timer.

Optionally, if the third information includes a broadcast/multicast service release request message, the third information includes a first interface identifier assigned by the first communication unit on the communication interface between the first communication unit and the second communication unit for a broadcast/multicast service, a second interface identifier assigned by a second communication unit on the communication interface between the first communication unit and the second communication unit for a broadcast/multicast service, or a reason for releasing a broadcast/multicast service.

In operation 320, fourth information sent by the first communication unit is received.

It is to be noted that the fourth information is used for indicating an execution result of an operation related to broadcast/multicast service management to the second communication unit. For example, the gNB-CU sends the fourth information to the gNB-DU to indicate modification acknowledgement of a broadcast/multicast service to the gNB-DU. If the gNB-CU agrees to the modification, the fourth information may be a broadcast/multicast service modification acknowledgement message. If the gNB-CU does not agree to the modification, the fourth information may be a broadcast/multicast service modification failure message.

In this embodiment of the present application, the fourth information includes any combination or at least one of the following: a broadcast/multicast service identifier used to identify a broadcast/multicast service, a first interface identifier assigned by the first communication unit on the communication interface between the first communication unit and the second communication unit for a broadcast/multicast service, a second interface identifier assigned by the second communication unit on the communication interface between the first communication unit and the second communication unit for a broadcast/multicast service, one or more service area identifiers supporting a broadcast/multicast service, one or more pieces of cell identifier information of a modified or released broadcast/multicast service, or information of successfully modified or released broadcast/multicast service radio bearer.

FIG. 4 is a flowchart of another broadcast/multicast service management method according to an embodiment of the present application. The method may be executed by a broadcast/multicast service management apparatus. The apparatus may be implemented by software and/or hardware, typically configured in an electronic device such as a base station. As shown in FIG. 4, the method includes operations below.

In operation 410, third information sent by a second communication unit is received.

In operation 420, fourth information is sent to the second communication unit.

According to the technical solution in this embodiment of the present application, a RAN air interface effectively implements related management flows such as modification or release of a broadcast/multicast service under an NR architecture.

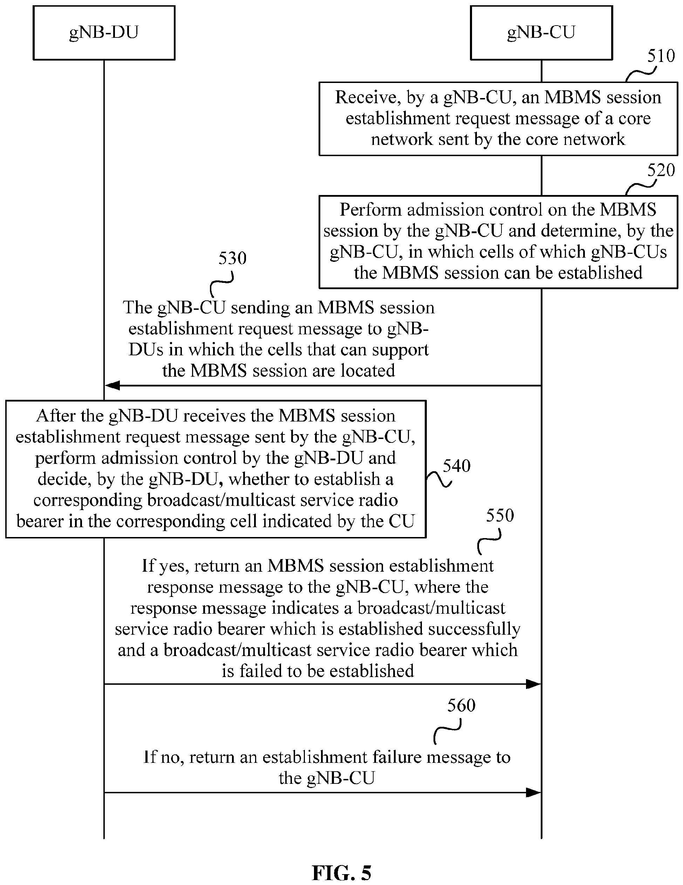

In an example embodiment, a broadcast/multicast service establishment flow between a CU and a DU in a base station is specifically described. FIG. 5 is a flowchart illustrating the establishment of a broadcast/multicast service between a gNB-CU and a gNB-DU according to an embodiment of the present application. As shown in FIG. 5, the flow includes the operations below.

In operation 510, a gNB-CU receives an MBMS session establishment request message of a core network sent by the core network.

The MBMS session establishment request message of a core network mainly includes any combination or at least one of the following: a broadcast/multicast service identifier; information of a service area identifier (SAI), where the MBMS session is located in the service area; or an MBMS session flow identifier and attribute parameter information of quality of service (QoS) of the MBMS session flow included in the MBMS session. The broadcast/multicast service identifier may identify a broadcast/multicast service through an MBMS session identity document (ID), a temporary mobile group identity (TMGI), or other identifier information.

In operation 520, the gNB-CU performs admission control on the MBMS session and determines in which cells of which gNB-CUs the MBMS session can be established.

Meanwhile, according to the QoS profile information of each flow included in the MBMS session indicated by the core network, the gNB-CU performs mapping from flows to broadcast/multicast service radio bearers, determines the broadcast/multicast service radio bearer to be established in the corresponding cell, and generates the QoS profile information of the broadcast/multicast service radio bearer according to the QoS profile information of the flow mapped to the broadcast/multicast service radio bearer. The broadcast/multicast service radio bearer is mainly used for carrying MBMS data sent by a base station to a UE on the radio access network. In addition, if the transport mode between the gNB-CU (or simply CU) and the gNB-DU (or simply DU) is IP multicast, the gNB-CU further needs to assign downlink data TNL information for transmitting the broadcast/multicast service radio bearer to the DU. Specifically, the downlink data TNL information includes an IP multicast address, an IP source address, and a GTP-TEID.

In operation 530, the gNB-CU initiates an establishment request session flow of the MBMS session to gNB-DUs in which the cells that can support the MBMS session are located. Specifically, the gNB-CU sends an MBMS session establishment request message to these gNB-DUs.

Optionally, the granularity of the message may be an MBMS session or a non-UE associated signaling.

The message mainly includes any combination or at least one of the following: a broadcast/multicast service identifier; a unique interface identifier (that is, MBMS Session F1 Application Protocol (FlAP) ID) assigned by the gNB-CU on the F1 interface between the gNB-CU and the gNB-DU for the broadcast/multicast service; if the transport mode between the gNB-CU and the gNB-DU is IP multicast, needing to carry the IP multicast TNL information assigned for each gNB-DU; one or more service area identifiers (SAIs) supporting the broadcast/multicast service; adding one or more cell identifiers supporting the broadcast/multicast service, where the cell identifiers include NCGI information or PCI information; a cell list identifier of a service area; information of a broadcast/multicast service radio bearer needing to be established; change notification indication information used for the gNB-CU to notify the gNB-DU that the configuration information of the broadcast/multicast service is changed; configuration information of the broadcast/multicast service; or information of an RLC mode of a broadcast/multicast service radio bearer.

The broadcast/multicast service identifier may identify a broadcast/multicast service through an MBMS session ID, a TMGI, or other identifier information.

The IP multicast TNL information specifically includes any combination or at least one of the following: an IP multicast address, an IP source address, or a GTP DL TEID.

The information of the broadcast/multicast service radio bearer needing to be established includes identifier information of a broadcast/multicast service radio bearer and/or attribute information of a broadcast/multicast service radio bearer.

The attribute information of a broadcast/multicast service radio bearer further includes QoS information of the broadcast/multicast service radio bearer, dataflow information mapped to the broadcast/multicast service radio bearer, and notification control. The dataflow information mapped to the broadcast/multicast service radio bearer includes any combination or at least one of the following: dataflow identifier information or QoS information of the dataflow mapped to the broadcast/multicast service radio bearer.

The change notification indication information is used for the CU to notify the DU that the configuration information of the broadcast/multicast service is changed. After receiving the change notification indication information, the DU sends downlink control information (DCI) to a UE, indicating that the configuration information of the broadcast/multicast service control channel/information is changed.

The configuration information of the broadcast/multicast service includes any combination or at least one of the following: system information of broadcast/multicast service information, control channel/information configuration parameters of the broadcast/multicast service, transport channel/information configuration parameters of the broadcast/multicast service, or radio bearer configuration parameters of the broadcast/multicast service.

In operation 540, after receiving the MBMS session establishment request message sent by the gNB-CU, the gNB-DU performs admission control and decides whether to establish a corresponding broadcast/multicast service radio bearer in the corresponding cell indicated by the CU.

In operation 550, if yes, an MBMS session establishment response message is returned to the gNB-CU. The response message indicates a broadcast/multicast service radio bearer which is established successfully and a broadcast/multicast service radio bearer which is failed to be established.

In the case where the MBMS session is established successfully, the MBMS session establishment response message returned by the DU to the CU includes any combination or at least one of the following: a broadcast/multicast service identifier; a unique interface identifier (that is, MBMS Session F1 AP ID) assigned by the CU on the F1 interface between the CU and the DU for the broadcast/multicast service; a unique interface identifier (that is, MBMS Session F1 AP ID) assigned by the DU on the F1 interface between the CU and the DU for the broadcast/multicast service; one or more service area identifiers (SAIs) supporting the broadcast/multicast service; one or more pieces of cell identifier information of an established broadcast/multicast service; a cell list identifier of a service area; information of a successfully established broadcast/multicast service radio bearer including identifier information of the successfully established broadcast/multicast service radio bearer and/or a logical channel identifier (LCID) of the successfully established broadcast/multicast service radio bearer; configuration information of a second communication unit of a broadcast/multicast service; downlink data TNL information of a successfully established broadcast/multicast service radio bearer, where the downlink data TNL information includes an IP address and/or a GTP DL TEID, and the downlink data TNL information of the successfully established broadcast/multicast service radio bearer may be unique downlink data TNL information shared by all cells in the second communication unit, or may be multiple pieces of downlink data TNL information unique to each cell in the second communication unit; or information of a broadcast/multicast service radio bearer which is failed to be established, including any combination or at least one of the following: identifier information of the broadcast/multicast service radio bearer which is failed to be established or a reason for establishment failure of the broadcast/multicast service radio bearer. The broadcast/multicast service identifier may identify a broadcast/multicast service through an MBMS session ID, a TMGI, or other identifier information.

The configuration information of a second communication unit of a broadcast/multicast service includes any combination or at least one of the following: configuration parameters of a DU of control channel/information of the broadcast/multicast service, configuration parameters of a DU of transport channel/information of the broadcast/multicast service, or configuration parameters of a DU of a broadcast/multicast service radio bearer.

The configuration parameters of a DU of control channel/information of the broadcast/multicast service include any combination or at least one of the following: a repetition period (that is, mcch-RepetionPeriod) of broadcast/multicast control channel/information, an offset of broadcast/multicast control channel/information, a start slot (that is, mcch-slot-bitmap) of broadcast/multicast control channel/information, a duration (that is, mcch-duration) of broadcast/multicast control channel/information, a modification period (that is, mcch-ModificationPeriod) of broadcast/multicast control channel/information, or a frequency domain bandwidth part ID (BWP ID) of broadcast/multicast control channel/information.

The configuration parameters of a DU of transport channel/information of the broadcast/multicast service include scheduling configuration information (that is, mtch-scheduling info) of broadcast/multicast transport channel/information. The scheduling configuration information (that is, mtch-scheduling info) of broadcast/multicast transport channel/information includes any combination or at least one of the following: a duration timer (that is, onduration timer) of the broadcast/multicast transport channel/information, a timer (that is, drx-inactivity timer) related to discontinuous reception (DRX) of the broadcast/multicast transport channel/information, a scheduling period of the broadcast/multicast transport channel/information, a scheduling offset of the broadcast/multicast transport channel/information, or a frequency domain bandwidth part identifier (BWP ID) of the broadcast/multicast transport channel/information.

The configuration parameters of a DU of a broadcast/multicast service radio bearer include a sequence number length of an RLC layer and/or a reassembly timer (that is, T-Reassembly timer).

In operation 560, if no, an establishment failure message is returned to the gNB-CU.

The MBMS session establishment failure message returned by the DU to the CU includes any combination or at least one of the following: a unique interface identifier (that is, MBMS Session F1 AP ID) assigned by the CU on the F1 interface between the CU and the DU for the broadcast/multicast service, a unique interface identifier (that is, MBMS Session F1 AP ID) assigned by the DU on the F1 interface between the CU and the DU for the broadcast/multicast service, or a reason for establishment failure of the MBMS session.

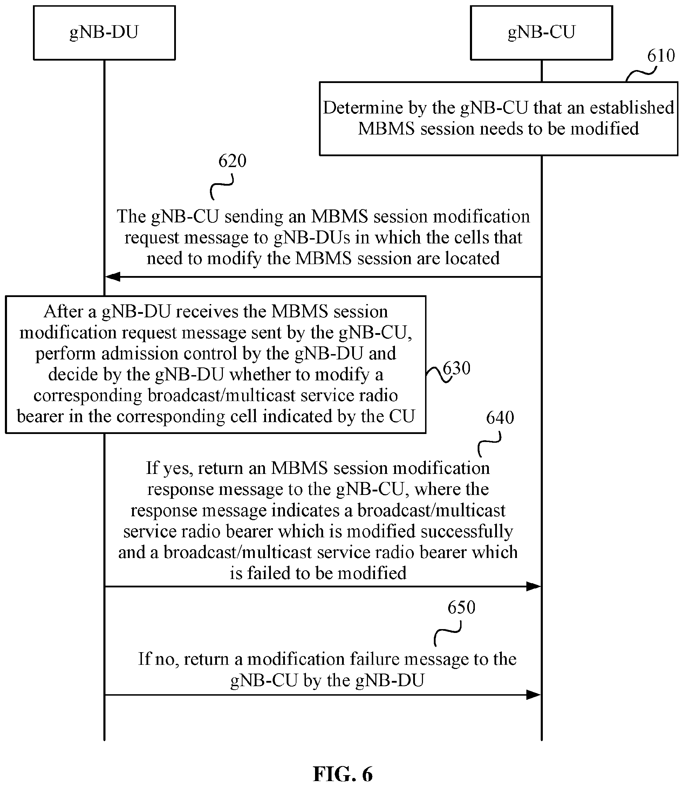

In an example embodiment, a broadcast/multicast service modification flow between a CU and a DU in a base station is specifically described. FIG. 6 is a flowchart illustrating the modification of a broadcast/multicast service between a gNB-CU and a gNB-DU initiated by the gNB-CU according to an embodiment of the present application. As shown in FIG. 6, the flow includes the operations below.

In operation 610, the gNB-CU determines that an established MBMS session needs to be modified.

For example, parameters of a broadcast/multicast service radio bearer are modified. It may also be necessary to update, modify, or release the existing broadcast/multicast service radio bearer for the established MBMS session. Configuration information related to the MBMS session may also need to be modified. The cell list corresponding to the service area of the MBMS session may also need to be added, modified, and released.

In operation 620, the gNB-CU initiates a modification request session flow of the MBMS session to gNB-DUs in which the cells that need to modify the MBMS session are located. Specifically, the gNB-CU sends an MBMS session modification request message to these gNB-DUs.

Optionally, the granularity of the message may be an MBMS session or a non-UE associated signaling.

In operation 630, after receiving the MBMS session modification request message sent by the gNB-CU, a gNB-DU performs admission control and decides whether to modify a corresponding broadcast/multicast service radio bearer in the corresponding cell indicated by the CU.

In operation 640, if yes, an MBMS session modification response message is returned to the gNB-CU. The response message indicates a broadcast/multicast service radio bearer which is modified successfully and a broadcast/multicast service radio bearer which is failed to be modified.

In operation 650, if no, the gNB-DU returns a modification failure message to the gNB-CU.

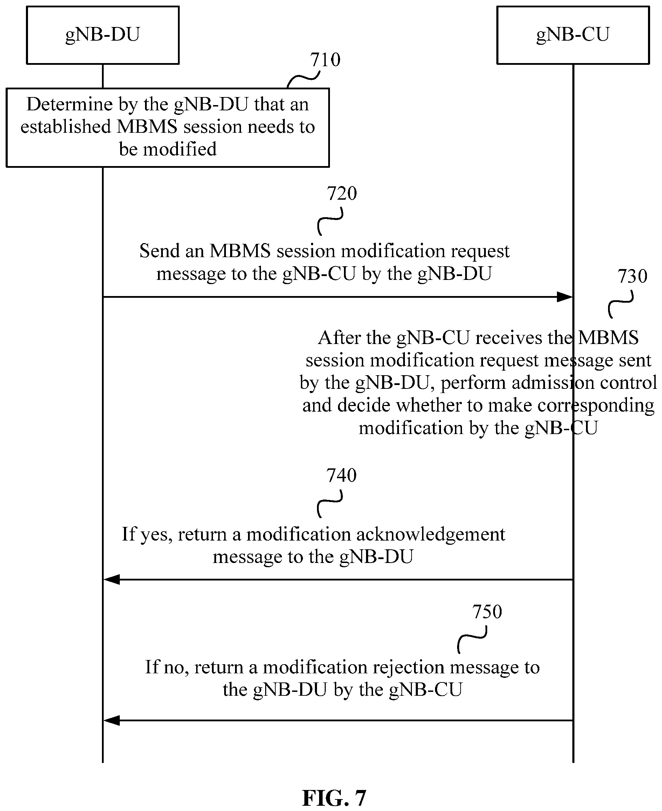

In an example embodiment, a broadcast/multicast service modification flow between a DU and a CU in a base station is specifically described. FIG. 7 is a flowchart illustrating the modification of a broadcast/multicast service between a gNB-CU and a gNB-DU initiated by the gNB-DU according to an embodiment of the present application. As shown in FIG. 7, the flow includes the operations below.

In operation 710, the gNB-DU determines that an established MBMS session needs to be modified.

For example, configuration parameters of a DU of a broadcast/multicast service radio bearer are modified. An established broadcast/multicast service radio bearer may also need to be modified or released. Configuration information related to the MBMS session may also need to be modified. The cell list corresponding to the service area of the MBMS session may also need to be modified and released.

In operation 720, the gNB-DU initiates a modification request session flow of the MBMS session to the gNB-CU. Specifically, the gNB-DU sends an MBMS session modification request message to the gNB-CU.

Optionally, the granularity of the message may be an MBMS session or a non-UE associated signaling.

The message mainly includes any combination or at least one of the following: a broadcast/multicast service identifier; a unique interface identifier (that is, MBMS Session F1 AP ID) assigned by the CU on the F1 interface between the CU and the DU for the broadcast/multicast service; a unique interface identifier (that is, MBMS Session F1 AP ID) assigned by the DU on the F1 interface between the CU and the DU for the broadcast/multicast service; one or more service area identifiers (SAIs) supporting the broadcast/multicast service; one or more cell identifiers of one or more cells which needs to modify or release the broadcast/multicast service, where the cell identifiers include NCGI information or PCI information; a cell list identifier of a service area; attribute information of a broadcast/multicast service radio bearer needing to be modified or released; configuration information of a DU of the broadcast/multicast service; or downlink data TNL information of a broadcast/multicast service radio bearer needing to be modified, where the downlink data TNL information includes an IP address and/or a GTP DL TEID, and the downlink data TNL information of the broadcast/multicast service radio bearer needing to be modified is unique downlink data TNL information shared by all cells in a second communication unit or multiple pieces of downlink data TNL information unique to each cell in a second communication unit.

The broadcast/multicast service identifier may identify a broadcast/multicast service through an MBMS session ID, a TMGI, or other identifier information.

The attribute information of a broadcast/multicast service radio bearer needing to be modified specifically includes any combination or at least one of the following: identifier information of the broadcast/multicast service radio bearer or an RLC status of the broadcast/multicast service radio bearer.

The configuration information of a DU of the broadcast/multicast service includes any combination or at least one of the following: configuration parameters of a DU of control channel/information of the broadcast/multicast service, configuration parameters of a DU of transport channel/information of the broadcast/multicast service, or configuration parameters of a DU of a broadcast/multicast service radio bearer.

The configuration parameters of a DU of control channel/information of the broadcast/multicast service include any combination or at least one of the following: a repetition period (that is, mcch-RepetionPeriod) of broadcast/multicast control channel/information, an offset of broadcast/multicast control channel/information, a start slot (that is, mcch-slot-bitmap) of broadcast/multicast control channel/information, a duration (that is, mcch-duration) of broadcast/multicast control channel/information, a modification period (that is, mcch-ModificationPeriod) of broadcast/multicast control channel/information, or a frequency domain bandwidth part ID (BWP ID) of broadcast/multicast control channel/information.

The configuration parameters of a DU of transport channel/information of the broadcast/multicast service include scheduling configuration information (that is, mtch-scheduling info) of broadcast/multicast transport channel/information. The scheduling configuration information (that is, mtch-scheduling info) of broadcast/multicast transport channel/information includes any combination or at least one of the following: a duration timer (that is, onduration timer) of the broadcast/multicast transport channel/information, a timer (that is, drx-inactivity timer) related to discontinuous reception (DRX) of the broadcast/multicast transport channel/information, a scheduling period of the broadcast/multicast transport channel/information, a scheduling offset of the broadcast/multicast transport channel/information, or a frequency domain bandwidth part identifier (BWP ID) of the broadcast/multicast transport channel/information.

In operation 730, after receiving the MBMS session modification request message sent by the gNB-DU, the gNB-CU performs admission control and decides whether to make corresponding modification.

In operation 740, if yes, a modification acknowledgement message is returned to the gNB-DU.

The MBMS session modification acknowledgement message returned by the CU to the DU includes any combination or at least one of the following: a broadcast/multicast service identifier, a unique interface identifier (that is, MBMS Session F1 AP ID) assigned by the CU on the F1 interface between the CU and the DU for the broadcast/multicast service, a unique interface identifier (that is, MBMS Session F1 AP ID) assigned by the DU on the F1 interface between the CU and the DU for the broadcast/multicast service, one or more service area identifiers (SAIs) supporting the broadcast/multicast service, one or more pieces of cell identifier information having modified or released the broadcast/multicast service, a cell list identifier of a service area, or information of successfully modified or released broadcast/multicast service radio bearer.

The broadcast/multicast service identifier may identify a broadcast/multicast service through an MBMS session ID, a TMGI, or other identifier information.

In operation 750, if no, the gNB-CU returns a modification rejection message to the gNB-DU.

The MBMS session modification rejection message returned by the CU to the DU includes any combination or at least one of the following: a unique interface identifier (that is, MBMS Session F1 AP ID) assigned by the CU on the F1 interface between the CU and the DU for the broadcast/multicast service, a unique interface identifier (that is, MBMS Session F1 AP ID) assigned by the DU on the F1 interface between the CU and the DU for the broadcast/multicast service; or a reason for modification failure of the MBMS session.

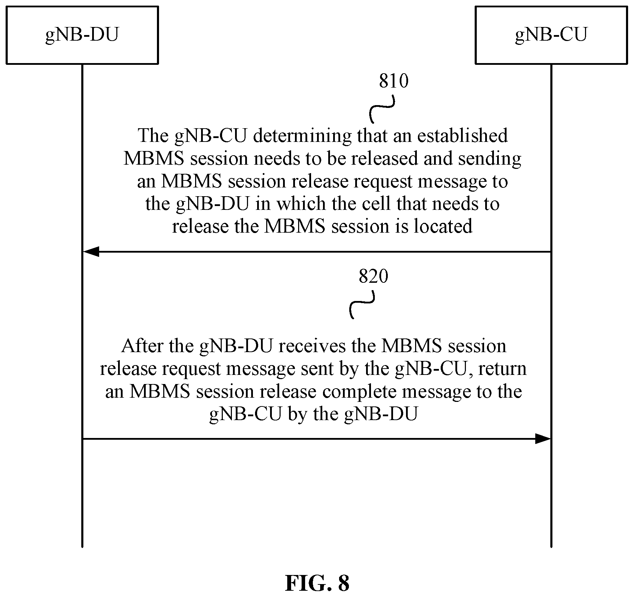

In an example embodiment, a broadcast/multicast service release flow between a CU and a DU in a base station is specifically described. FIG. 8 is a flowchart illustrating the release of a broadcast/multicast service between a gNB-CU and a gNB-DU initiated by the gNB-CU according to an embodiment of the present application. As shown in FIG. 8, the flow includes the operations below.

In operation 810, the gNB-CU determines that an established MBMS session needs to be released. The gNB-CU initiates a release request session flow of the MBMS session to the gNB-DU in which the cell that needs to release the MBMS session is located. Specifically, the gNB-CU sends an MBMS session release request message to the gNB-DU.

Optionally, the granularity of the message may be an MBMS session or a non-UE associated signaling.

The message mainly includes any combination or at least one of the following: a unique interface identifier (that is, MBMS Session F1 AP ID) assigned by the CU on the F1 interface between the CU and the DU for the broadcast/multicast service, a unique interface identifier (that is, MBMS Session F1 AP ID) assigned by the DU on the F1 interface between the CU and the DU for the broadcast/multicast service, or a reason for releasing the broadcast/multicast service.

In operation 820, after receiving the MBMS session release request message sent by the gNB-CU, the gNB-DU returns an MBMS session release complete message to the gNB-CU.

The message mainly includes any combination or at least one of the following: a unique interface identifier (that is, MBMS Session F1 AP ID) assigned by the CU on the F1 interface between the CU and the DU for the broadcast/multicast service or a unique interface identifier (that is, MBMS Session F1 AP ID) assigned by the DU on the F1 interface between the CU and the DU for the broadcast/multicast service.

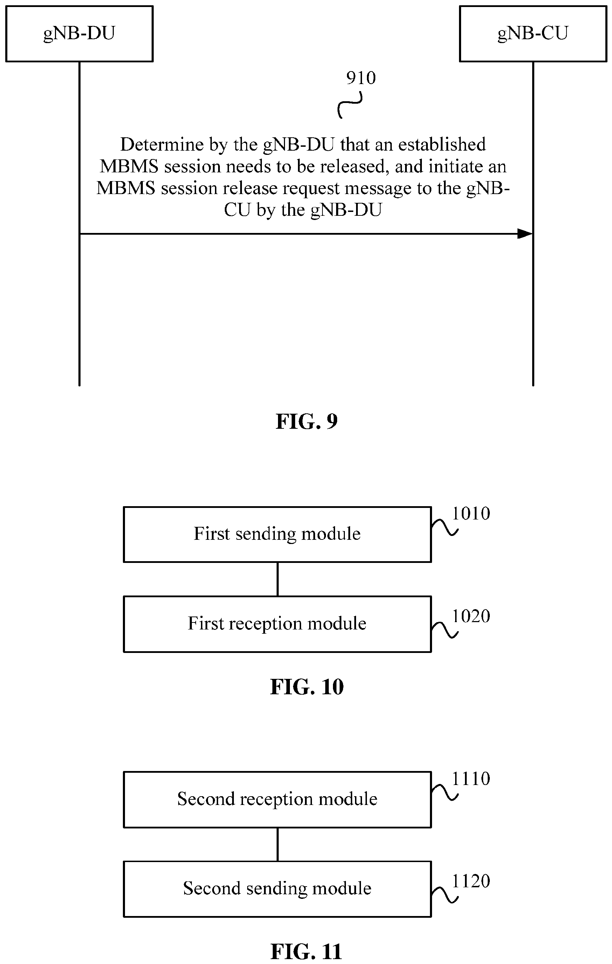

In an example embodiment, a broadcast/multicast service release flow between a DU and a CU in a base station is specifically described. FIG. 9 is a flowchart illustrating the release of a broadcast/multicast service between a gNB-CU and a gNB-DU initiated by the gNB-DU according to an embodiment of the present application. As shown in FIG. 9, the flow includes the operations below.

In operation 910, the gNB-DU determines that an established MBMS session needs to be released, and the gNB-DU initiates a release request session flow of the MBMS session to the gNB-CU. Specifically, the gNB-DU sends an MBMS session release request message to the gNB-CU.

The setting scenario requirements include that an established MBMB session needs to be released for reasons such as poor air interface link quality.

Optionally, the granularity of the message may be an MBMS session or a non-UE associated signaling.

The message mainly includes any combination or at least one of the following: a unique interface identifier (that is, MBMS Session F1 AP ID) assigned by the CU on the F1 interface between the CU and the DU for the broadcast/multicast service, a unique interface identifier (that is, MBMS Session F1 AP ID) assigned by the DU on the F1 interface between the CU and the DU for the broadcast/multicast service, or a reason for releasing the broadcast/multicast service.

FIG. 10 is a block diagram illustrating the structure of a broadcast/multicast service management apparatus according to an embodiment of the present application. The apparatus may be implemented by software and/or hardware, typically configured in an electronic device such as a base station. As shown in FIG. 10, the apparatus includes a first sending module 1010 and a first reception module 1020.

The first sending module 1010 is configured to send first information to a second communication unit. The first information is used to instruct the second communication unit to execute an operation related to broadcast/multicast service management.

The first reception module 1020 is configured to receive second information sent by the second communication unit. The second information is used to indicate an execution result of the operation to a first communication unit.

The broadcast/multicast service management apparatus provided in this embodiment can execute the broadcast/multicast service management method provided in the embodiments of the present application and has function modules and beneficial effects corresponding to the method.

FIG. 11 is a block diagram illustrating the structure of another broadcast/multicast service management apparatus according to an embodiment of the present application. The apparatus may be implemented by software and/or hardware, typically configured in an electronic device such as a base station. As shown in FIG. 11, the apparatus includes a second reception module 1110 and a second sending module 1120.

The second reception module 1110 is configured to receive first information sent by a first communication unit. The first information is used to instruct a second communication unit to execute an operation related to broadcast/multicast service management.

The second sending module 1120 is configured to send second information to the first communication unit. The second information is used to indicate an execution result of the operation to the first communication unit.

The broadcast/multicast service management apparatus provided in this embodiment can execute the broadcast/multicast service management method provided in the embodiments of the present application and has function modules and beneficial effects corresponding to the method.

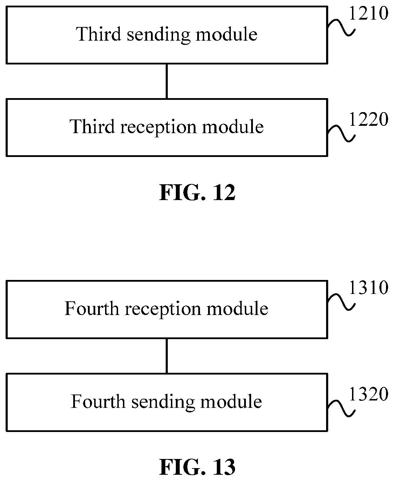

FIG. 12 is a block diagram illustrating the structure of another broadcast/multicast service management apparatus according to an embodiment of the present application. The apparatus may be implemented by software and/or hardware, typically configured in an electronic device such as a base station. As shown in FIG. 12, the apparatus includes a third sending module 1210 and a third reception module 1220.

The third sending module 1210 is configured to send third information to a first communication unit. The third information is used to instruct the first communication unit to execute an operation related to broadcast/multicast service management.

The third reception module 1220 is configured to receive fourth information sent by the first communication unit. The fourth information is used to indicate an execution result of the operation to a second communication unit.

The broadcast/multicast service management apparatus provided in this embodiment can execute the broadcast/multicast service management method provided in the embodiments of the present application and has function modules and beneficial effects corresponding to the method.

FIG. 13 is a block diagram illustrating the structure of another broadcast/multicast service management apparatus according to an embodiment of the present application. The apparatus may be implemented by software and/or hardware, typically configured in an electronic device such as a base station. As shown in FIG. 13, the apparatus includes a fourth reception module 1310 and a fourth sending module 1320.

The fourth reception module 1310 is configured to receive third information sent by a second communication unit. The third information is used to instruct a first communication unit to execute an operation related to broadcast/multicast service management.

The fourth sending module 1320 is configured to send fourth information to the second communication unit. The fourth information is used to indicate an execution result of the operation to the second communication unit.

The broadcast/multicast service management apparatus provided in this embodiment can execute the broadcast/multicast service management method provided in the embodiments of the present application and has function modules and beneficial effects corresponding to the method.

An embodiment of the present application provides an electronic device. The electronic device includes one or more processors and a memory.

The memory is configured to store one or more programs.

When executed by the one or more processors, the one or more programs cause the one or more processors to implement the method in any embodiment of the present application.

An embodiment of the present application provides a storage medium storing a computer program which, when executed by a processor, implements the method in any embodiment of the present application.

The above are only example embodiments of the present application and are not intended to limit the scope of the present application.

A block diagram of any logic flow among the drawings of the present application may represent program steps, may represent interconnected logic circuits, modules, and functions, or may represent a combination of program steps with logic circuits, modules, and functions. Computer programs may be stored in a memory. The memory may be of any type suitable for a local technical environment and may be implemented using any suitable data storage technology, for example, but not limited to, a read-only memory (ROM), a random-access memory (RAM), and an optical memory device and system (digital versatile disc (DVD) or compact disc (CD)). A computer-readable medium may include a non-transitory storage medium. A data processor may be in any type suitable for the local technical environment, for example, but not limited to, a general-purpose computer, a special-purpose computer, a microprocessor, a digital signal processor (DSP), an application-specific integrated circuit (ASIC), a field-programmable gate array (FGPA), and a processor based on a multi-core processor architecture.

## Claims

1. A broadcast/multicast service management method, comprising:
sending first information to a second communication unit, wherein the first information is used to instruct the second communication unit to execute an operation related to broadcast/multicast service management; and
receiving second information sent by the second communication unit, wherein the second information is used to indicate an execution result of the operation related to the broadcast/multicast service management to a first communication unit.

2. The method of claim 1, wherein the first information comprises a broadcast/multicast service establishment request message, a broadcast/multicast service modification request message, or a broadcast/multicast service release request message.

3. The method of claim 2, wherein in a case where the first information comprises the broadcast/multicast service establishment request message or the broadcast/multicast service modification request message, the first information comprises at least one of the following:
a broadcast/multicast service identifier used to identify a broadcast/multicast service;
a first interface identifier assigned by the first communication unit on a communication interface between the first communication unit and the second communication unit for a broadcast/multicast service;
a second interface identifier assigned by the second communication unit on a communication interface between the first communication unit and the second communication unit for a broadcast/multicast service;
at least one service area identifier supporting a broadcast/multicast service;
a cell identifier of at least one cell which needs to establish, modify, or release a broadcast/multicast service, wherein the cell identifier comprises new radio cell global identifier, NCGI, information or physical cell identifier, PCI, information;
a cell list identifier of a service area;
information of a broadcast/multicast service radio bearer needing to be established or modified;
configuration information of a broadcast/multicast service;
information of a radio link control, RLC, mode of a broadcast/multicast service radio bearer;
information of a broadcast/multicast service radio bearer needing to be released comprising identifier information of a broadcast/multicast service radio bearer; or
change notification indication information, wherein the change notification indication information is used for the first communication unit to notify the second communication unit that configuration information of a broadcast/multicast service is changed.

4. The method of claim 3, wherein the information of the broadcast/multicast service radio bearer needing to be established or modified comprises at least one of identifier information of a broadcast/multicast service radio bearer or attribute information of a broadcast/multicast service radio bearer.

5. The method of claim 4, wherein the attribute information of the broadcast/multicast service radio bearer comprises quality of service information of the broadcast/multicast service radio bearer, dataflow information mapped to the broadcast/multicast service radio bearer, and notification control, wherein the dataflow information mapped to the broadcast/multicast service radio bearer comprises at least one of dataflow identifier information or quality of service information of a dataflow mapped to the broadcast/multicast service radio bearer.

6. The method of claim 3, wherein the configuration information of the broadcast/multicast service comprises at least one of the following:
system information of broadcast/multicast service information;
control channel/information configuration parameters of the broadcast/multicast service;
transport channel/information configuration parameters of the broadcast/multicast service; or
radio bearer configuration parameters of the broadcast/multicast service.

7. The method of claim 3, wherein in a case where a transport mode between the first communication unit and the second communication unit is Internet protocol, IP, multicasting, the first information further comprises IP multicasting downlink user plane transport network layer, DL UP TNL, information assigned to the second communication unit, wherein
the IP multicasting DL UP TNL information comprises at least one of the following:
an IP multicast address;
an IP source address; or
a general packet radio service tunneling protocol downlink tunnel endpoint identifier, GTP DL TEID.

8. The method of claim 2, wherein in a case where the first information comprises the broadcast/multicast service release request message, the first information comprises at least one of the following:
a first interface identifier assigned by the first communication unit on a communication interface between the first communication unit and the second communication unit for a broadcast/multicast service;
a second interface identifier assigned by the second communication unit on a communication interface between the first communication unit and the second communication unit for a broadcast/multicast service; or
a reason for releasing a broadcast/multicast service.

9. The method of claim 1, wherein the second information comprises a broadcast/multicast service establishment response message, a broadcast/multicast service modification response message, or a broadcast/multicast service release response message.

10. The method of claim 9, wherein in a case where the second information comprises the broadcast/multicast service establishment response message or the broadcast/multicast service modification response message, the second information comprises at least one of the following:
a broadcast/multicast service identifier used to identify a broadcast/multicast service;
a first interface identifier assigned by the first communication unit on a communication interface between the first communication unit and the second communication unit for a broadcast/multicast service;
a second interface identifier assigned by the second communication unit on a communication interface between the first communication unit and the second communication unit for a broadcast/multicast service;
at least one service area identifier supporting a broadcast/multicast service;
cell identifier information of at least one cell which has an established, modified, or released broadcast/multicast service;
information of a successfully established or modified broadcast/multicast service radio bearer comprising at least one of identifier information of a successfully established or modified broadcast/multicast service radio bearer or a logical channel identifier of a successfully established or modified broadcast/multicast service radio bearer;
information of a successfully released broadcast/multicast service radio bearer;
configuration information of a second communication unit of a broadcast/multicast service;
downlink data transport network layer, TNL, information of a successfully established or modified broadcast/multicast service radio bearer, wherein the downlink data TNL information comprises an IP address and/or a GTP DL TEID;
information of a broadcast/multicast service radio bearer which is failed to be established, comprising at least one of identifier information of the broadcast/multicast service radio bearer which is failed to be established or a reason for establishment failure of the broadcast/multicast service radio bearer;
information of a broadcast/multicast service radio bearer which is failed to be modified, comprising at least one of identifier information of the broadcast/multicast service radio bearer which is failed to be modified or a reason for modification failure of the broadcast/multicast service radio bearer;
a reason for establishment failure of a broadcast/multicast service; or
a reason for modification failure of a broadcast/multicast service.

11. The method of claim 10, wherein the downlink data TNL information of the successfully established or modified broadcast/multicast service radio bearer is unique downlink data TNL information shared by all cells in the second communication unit or a plurality of pieces of downlink data TNL information unique to each cell in the second communication unit.

12. The method of claim 10, wherein the configuration information of the second communication unit of the broadcast/multicast service comprises at least one of the following:
configuration parameters of the second communication unit of control channel/information of the broadcast/multicast service;
configuration parameters of the second communication unit of transport channel/information of the broadcast/multicast service; or
configuration parameters of the second communication unit of a broadcast/multicast service radio bearer,
wherein the configuration parameters of the second communication unit of control channel/information of the broadcast/multicast service comprise at least one of the following:
a repetition period of broadcast/multicast control channel/information;
an offset of broadcast/multicast control channel/information;
a start slot of broadcast/multicast control channel/information;
a duration of broadcast/multicast control channel/information;
a modification period of broadcast/multicast control channel/information; or
a frequency domain bandwidth part identifier of broadcast/multicast control channel/information;
the configuration parameters of the second communication unit of transport channel/information of the broadcast/multicast service comprise scheduling configuration information of the broadcast/multicast transport channel/information, wherein the scheduling configuration information of the broadcast/multicast transport channel/information comprises at least one of the following:
a duration timer of the broadcast/multicast transport channel/information;
a timer related to discontinuous reception, DRX, of the broadcast/multicast transport channel/information;
a scheduling period of the broadcast/multicast transport channel/information;
a scheduling offset of the broadcast/multicast transport channel/information; or
a frequency domain bandwidth part identifier of the broadcast/multicast transport channel/information; and
the configuration parameters of the second communication unit of the broadcast/multicast service radio bearer comprise at least one of the following:
a sequence number length of a radio link control, RLC, layer; or
a reassembly timer.

13. The method of claim 9, wherein in a case where the second information comprises the broadcast/multicast service release response message, the second information comprises at least one of the following:
a first interface identifier assigned by the first communication unit on a communication interface between the first communication unit and the second communication unit for a broadcast/multicast service; or
a second interface identifier assigned by the second communication unit on a communication interface between the first communication unit and the second communication unit for a broadcast/multicast service.

14. A broadcast/multicast service management method, comprising:
receiving first information sent by a first communication unit, wherein the first information is used to instruct a second communication unit to execute an operation related to broadcast/multicast service management; and
sending second information to the first communication unit, wherein the second information is used to indicate an execution result of the operation related to broadcast/multicast service management to the first communication unit.

15. A broadcast/multicast service management method, comprising:
sending third information to a first communication unit, wherein the third information is used to instruct the first communication unit to execute an operation related to broadcast/multicast service management; and
receiving fourth information sent by the first communication unit, wherein the fourth information is used to indicate an execution result of the operation related to broadcast/multicast service management to a second communication unit.

16. The method of claim 15, wherein the third information comprises a broadcast/multicast service modification request message or a broadcast/multicast service release request message.

17. The method of claim 16, wherein in a case where the third information comprises the broadcast/multicast service modification request message, the third information comprises at least one of the following:
a broadcast/multicast service identifier used to identify a broadcast/multicast service;
a first interface identifier assigned by the first communication unit on a communication interface between the first communication unit and the second communication unit for a broadcast/multicast service;
a second interface identifier assigned by the second communication unit on a communication interface between the first communication unit and the second communication unit for a broadcast/multicast service;
at least one service area identifier supporting a broadcast/multicast service;
a cell identifier of at least one cell which needs to modify or release a broadcast/multicast service, wherein the cell identifier comprises new radio cell global identifier, NCGI, information or physical cell identifier, PCI, information;
a cell list identifier of a service area;
attribute information of a broadcast/multicast service radio bearer needing to be modified;
configuration information of a second communication unit of a broadcast/multicast service; or
downlink data TNL information of a broadcast/multicast service radio bearer needing to be modified, wherein the downlink data TNL information comprises at least one of an Internet protocol, IP, address or a general packet radio service tunneling protocol downlink tunnel endpoint identifier, GTP DL TEID.

18. The method of claim 17, wherein the downlink data TNL information of a broadcast/multicast service radio bearer needing to be modified is unique downlink data TNL information shared by all cells in the second communication unit or a plurality of pieces of downlink data TNL information unique to each cell in the second communication unit.

19. The method of claim 17, wherein the attribute information of a broadcast/multicast service radio bearer needing to be modified comprises at least one of the following:
identifier information of the broadcast/multicast service radio bearer; or
a radio link control, RLC, state of the broadcast/multicast service radio bearer.

20. The method of claim 17, wherein the configuration information of a second communication unit of a broadcast/multicast service comprises at least one of the following:
configuration parameters of a second communication unit of control channel/information of the broadcast/multicast service;
configuration parameters of a second communication unit of transport channel/information of the broadcast/multicast service; or
configuration parameters of a second communication unit of a broadcast/multicast service radio bearer,
wherein the configuration parameters of a second communication unit of control channel/information of the broadcast/multicast service comprise at least one of the following:
a repetition period of broadcast/multicast control channel/information;
an offset of broadcast/multicast control channel/information;
a start slot of broadcast/multicast control channel/information;
a duration of broadcast/multicast control channel/information;
a modification period of broadcast/multicast control channel/information; or
a frequency domain bandwidth part identifier of broadcast/multicast control channel/information;
the configuration parameters of a second communication unit of transport channel/information of the broadcast/multicast service comprise scheduling configuration information of broadcast/multicast transport channel/information, wherein the scheduling configuration information of broadcast/multicast transport channel/information comprises at least one of the following:
a duration timer of the broadcast/multicast transport channel/information;
a timer related to discontinuous reception, DRX, of the broadcast/multicast transport channel/information;
a scheduling period of the broadcast/multicast transport channel/information;
a scheduling offset of the broadcast/multicast transport channel/information; or
a frequency domain bandwidth part identifier of the broadcast/multicast transport channel/information; and
the configuration parameters of a second communication unit of a broadcast/multicast service radio bearer comprise at least one of the following:
a sequence number length of an RLC layer; or
a reassembly timer.

21. The method of claim 16, wherein in a case where the third information comprises the broadcast/multicast service release request message, the third information comprises:
a first interface identifier assigned by the first communication unit on a communication interface between the first communication unit and the second communication unit for a broadcast/multicast service;
a second interface identifier assigned by the second communication unit on a communication interface between the first communication unit and the second communication unit for a broadcast/multicast service; and
a reason for releasing a broadcast/multicast service.

22. The method of claim 15, wherein the fourth information comprises at least one of the following:
a broadcast/multicast service identifier used to identify a broadcast/multicast service;
a first interface identifier assigned by the first communication unit on a communication interface between the first communication unit and the second communication unit for a broadcast/multicast service;
a second interface identifier assigned by the second communication unit on a communication interface between the first communication unit and the second communication unit for a broadcast/multicast service;
at least one service area identifier supporting a broadcast/multicast service;
cell identifier information of at least one cell which has a modified or released broadcast/multicast service; or
information of successfully modified or released broadcast/multicast service radio bearer.

23. A broadcast/multicast service management method, comprising:
receiving third information sent by a second communication unit, wherein the third information is used to instruct a first communication unit to execute an operation related to broadcast/multicast service management; and
sending fourth information to the second communication unit, wherein the fourth information is used to indicate an execution result of the operation related to broadcast/multicast service management to the second communication unit.

24. A broadcast/multicast service management apparatus, comprising:
a first sending module configured to send first information to a second communication unit, wherein the first information is used to instruct the second communication unit to execute an operation related to broadcast/multicast service management; and
a first reception module configured to receive second information sent by the second communication unit, wherein the second information is used to indicate an execution result of the operation related to broadcast/multicast service management to a first communication unit.

25. A broadcast/multicast service management apparatus, comprising:
a second reception module configured to receive first information sent by a first communication unit, wherein the first information is used to instruct a second communication unit to execute an operation related to broadcast/multicast service management; and
a second sending module configured to send second information to the first communication unit, wherein the second information is used to indicate an execution result of the operation related to broadcast/multicast service management to the first communication unit.

26. A broadcast/multicast service management apparatus, comprising:
a third sending module configured to send third information to a first communication unit, wherein the third information is used to instruct the first communication unit to execute an operation related to broadcast/multicast service management; and
a third reception module configured to receive fourth information sent by the first communication unit, wherein the fourth information is used to indicate an execution result of the operation related to broadcast/multicast service management to a second communication unit.

27. A broadcast/multicast service management apparatus, comprising:
a fourth reception module configured to receive third information sent by a second communication unit, wherein the third information is used to instruct a first communication unit to execute an operation related to broadcast/multicast service management; and
a fourth sending module configured to send fourth information to the second communication unit, wherein the fourth information is used to indicate an execution result of the operation related to broadcast/multicast service management to the second communication unit.

28. An electronic device, comprising:
at least one processor; and
a memory configured to store at least one program,
wherein executed by the at least one processor, the at least one program causes the at least one processor to implement the method of any one of claims 1 to 23.

29. A storage medium storing a computer program which, when executed by a processor, implements the method of any one of claims 1 to 23.
